# EUROPÄISCHE PATENTSCHRIFT

(11) **EP 2 342 450 B1**
(45) Veröffentlichungstag und Bekanntmachung des Hinweises auf die Patenterteilung: **29.03.2017**
(21) Anmeldenummer: 09752109.0
(22) Anmeldetag: 29.10.2009
(51) Int. Cl.: F03B 17/00

(54) **ENERGIEERZEUGUNGSEINHEIT SOWIE VERFAHREN ZUR WARTUNG EINER ENERGIEERZEUGUNGSEINHEIT**
ENERGY GENERATING UNIT AND METHOD FOR MAINTAINING AN ENERGY GENERATING UNIT
UNITÉ DE PRODUCTION D'ÉNERGIE ET PROCÉDÉ DE MAINTENANCE D'UNE UNITÉ DE PRODUCTION D'ÉNERGIE

(30) Priorität: 03.11.2008 DE 102008054361
(43) Veröffentlichungstag der Anmeldung: 13.07.2011
(73) Patentinhaber: KSB Aktiengesellschaft, 67227 Frankenthal (DE)
(72) Erfinder: SRINGER, Peer, 67141 Neuhofen (DE); PENSLER, Thomas, 06179 Langenbogen (DE); TRAUGOTT, Ulrich, 67227 Frankenthal (DE); VEGA-VÖLK, Josephine, 68623 Lampertheim (DE); VORPAHL, Lenard, 76777 Neupotz (DE)
(86) Internationale Anmeldenummer: PCT/EP2009/007737
(87) Internationale Veröffentlichungsnummer: WO 2010/060520

(56) Entgegenhaltungen:
- WO-A1-2005/035977
- WO-A1-2005/078276
- DE-A1- 3 542 096
- GB-A- 2 447 514

## Beschreibung

Die vorliegende Erfindung betrifft eine Energieerzeugungseinheit, insbesondere eine an einem Gewässergrund stehende oder im Wasser schwimmende Energieerzeugungseinheit, sowie ein Verfahren zur Wartung einer Energieerzeugungseinheit.

Aus dem Stand der Technik sind bereits Energieerzeugungseinheiten, insbesondere Flusswasserturbinen bekannt, die beispielsweise in einem Fluss im nicht schiffbaren Bereich eingesetzt werden.

Eine derartige Flusswasserturbine ist bereits aus der WO 2005/078276 A1 bekannt, wobei bei der hieraus bekannten Flusswasserturbine langsam laufende, axial beaufschlagte Turbinenlaufräder mit starren oder beweglichen Blättern in einem leistungsoptimierten Durchströmgehäuse aufgehängt sind, das von einem seitlich, ober- und unterhalb umgebenden kastenförmigen Stahlblechmantel umgeben ist und einlaufsseitig von einem Stahllaufrechen geschützt wird.

Aus der U.S. 4,868,408 ist ebenfalls eine Flusswasserturbine bekannt, die eine röhrenförmige Form aufweist, wobei Einlauf, Turbine und Saugrohrteil von einem gemeinsamen Gehäuse umgeben werden.

Die DE 10 2005 040 807 A1 lehrt ferner eine axial-durchströmte Wasserturbine für den Einsatz in freier Strömung, deren Turbinengehäuse derart ausgestaltet ist, dass die Strömungsenergie der äußeren Strömung auf den Ausgang eines horizontal angeordneten Saugrohrs eine Injektorwirkung und somit einen Sog ausübt, wodurch zusätzlich das nutzbare Druckgefälle in der Turbinenstufe und somit die Leistung der Turbine gesteigert werden kann.

Die Druckschrift GB 2 447 514 A, die als nächstliegender Stand der Technik angesehen wird, offenbart die Merkmale des Oberbegriffs des Anspruchs 1.

J Die vorgenannten Flusswasserturbinen weisen jedoch das Problem auf, dass für eventuelle Wartungsarbeiten aufgrund des durchgängigen und einstückigen Außengehäuses grundsätzlich die komplette Flusswasserturbine als Einheit herausgehoben werden muss und sodann auf einem Ponton oder an Land zu reparieren ist. Dies ist verständlicherweise äußerst aufwendig, insbesondere hinsichtlich Zeitaufwand, Einsatz z. B. von Schiffskränen oder ähnlichem sowie im Hinblick auf das einzusetzende Personal. Grundsätzlich gilt, dass Handhabung und Durchführung von Servicearbeiten bei derartigen Flussturbinen hochgradig aufwendig sind.

Es ist daher die Aufgabe der vorliegenden Erfindung, eine Energieerzeugungseinheit der eingangs genannten Art in vorteilhafter Weise weiterzubilden, insbesondere dahingehend, dass diese effizienter einsetzbar und leichter zu warten ist.

Diese Aufgabe wird erfindungsgemäß durch eine Energieerzeugungseinheit mit den Merkmalen des Anspruchs 1 gelöst. Danach ist vorgesehen, dass eine Energieerzeugungseinheit, insbesondere eine an einem Gewässergrund stehende und/oder im Wasser schwimmende Energieerzeugungseinheit, aus Komponenten besteht, wobei die Komponenten ein Einlaufgehäuse, ein Turbinengehäuse, ein Antriebsaggregat, das im Turbinengehäuse angeordnet ist und ein nachgeordnetes Saugrohr umfassen, wobei lösbare Verbindungsmittel vorgesehen sind, mittels derer die Komponenten verbindbar sind, wobei die Verbindungsmittel zumindest teilweise als fernbetätigbare und/oder lösbare Verriegelungsmittel ausgebildet sind, wobei Führungsmittel vorgesehen sind, mittels derer aneinander angrenzende Komponenten zusammen- und/oder auseinanderführbar sind. Insbesondere wird es vorteilhafterweise durch die Erfindung möglich, dass kein durchgängiges, einstückiges Hauptgehäuse bzw. Außengehäuse der Energieerzeugungseinheit vorzusehen ist. Vielmehr ist die Energieerzeugungseinheit modular aufgebaut, wobei z.B. für Wartung, Reparatur oder Austausch nur die jeweilige Komponente zu entnehmen und aus dem Gewässer zu heben ist. Das Antriebsaggregat kann dabei derart ausgeführt sein, dass es eine Turbine, einen Generator bzw. eine Kraft- und/oder Arbeitsmaschine und gegebenenfalls Energieübertragungsmittel bzw. Anschlüsse hierfür aufweist. Dadurch ergibt sich der Vorteil einer verbesserten und verkürzten Wartung, da es insbesondere für die Wartung der Turbine nicht mehr notwendig ist, dass die komplette Energieerzeugungseinheit auftauchen muss und eine totale Demontage und ein Zerlegevorgang erforderlich ist, um eventuelle Wartungsarbeiten, insbesondere Routinewartungsarbeiten an der Turbine vorzunehmen. Die Komponenten der Energieerzeugungseinheit werden dabei idealerweise derart hinsichtlich Anzahl, Lage, Orientierung und Größe gewählt, dass die auftretenden Kräfte und Momente im Betrieb bestmöglich aufgenommen werden. Dabei werden vorteilhafterweise die jeweiligen Randbedingungen bezogen auf den Standort der Energieerzeugungseinheit berücksichtigt. Der modulare Aufbau hat zur Folge, dass die Betriebskosten gesenkt und der Aufbau insgesamt vereinfacht wird. Aufgrund der einfacheren Wartungsmöglichkeiten ergeben sich neue Auslegungsmöglichkeiten für die Komponenten, da mit anderen Werten betreffend die Standsicherheit und betreffend die Wartungsintervalle geplant werden kann. Die Fertigungs- und Entwicklungskosten werden somit reduziert. Es ist möglich, dass die Verbindungsmittel zumindest teilweise als fernbetätigbare und/oder lösbare Verriegelungsmittel ausgebildet sind. Dadurch ergibt sich der Vorteil, die Energieerzeugungseinrichtung in ihre Betriebsposition abzusenken und dort sicher, aber wieder lösbar anzuordnen. Durch die Möglichkeit der Fernbetätigung kann beispielsweise auf den Einsatz von Tauchern verzichtet werden, da z.B. zu wartende Komponenten entriegelt und hierdurch gelöst werden können. Eine Entnahme aus dem Gewässer ist sodann einfach z.B. von einem Boot aus möglich. Unter fernbetätigbaren Verriegelungsmitteln sind dabei beispielsweise fernansteuerbare Ver- bzw. Entriegelungsaktoren, aber auch z.B. durch Öffnungsstangen erreichbare und auslösbare Verriegelungen zu verstehen. Durch vorgesehene Führungsmittel, mittels derer aneinander angrenzende Komponenten zusammen- und/oder auseinander führbar sind, wird die Entnahme und Montage zusätzlich vereinfacht.

Es ist ferner denkbar, dass die Verbindungsmittel zumindest teilweise als Einhak- und/oder Hubverbindungen ausgeführt sind. Ferner erlaubt es eine derartige Ausgestaltung z.B. etwaige defekte Komponenten schnell auszutauschen.

Des Weiteren kann vorgesehen sein, dass ein oder mehrere Gelenke zum Verschwenken eines Teils oder von Teilen der Energieerzeugungseinheit und/oder zum Verschwenken von Komponenten gegeneinander vorgesehen sind. Eine derartige Verschwenkbarkeit hat den Vorteil, beispielsweise das Einlaufgehäuse gegenüber dem Turbinengehäuse zu verschwenken, um in der Folge Teile des Antriebsaggregates wie z. B. die Turbine der Energieerzeugungseinheit für Wartungszwecke zu entnehmen. Hierfür können im Inneren des Turbinengehäuses Führungsschienen vorgesehen sein, mittels derer die Turbine einfach ein- aber auch ausgeführt werden kann. Die Energieerzeugungseinheit kann derart ausgeführt sein, dass an der Energieerzeugungseinheit wenigstens eine Tür und/oder Klappe vorgesehen ist, durch die das Antriebsaggregat oder Teile des Antriebsaggregates entnehmbar sind. Von Vorteil ist in diesem Zusammenhang, wenn eine derartige Tür oder Klappe auf der Oberseite der Energieerzeugungseinheit angebracht ist. Hierdurch ergibt sich der Vorteil, dass das Antriebsaggregat oder Teile des Antriebsaggregates beispielsweise von einem Boot oder Schiff aus ohne Weiteres zugänglich sind, entnommen werden können und gegebenenfalls ausgetauscht oder gewartet werden können.

Es ist weiterhin denkbar, dass Verankerungsmittel vorgesehen sind, mittels derer die Komponenten zumindest teilweise am Gewässergrund verankerbar sind. Von Vorteil erweist sich dabei, wenn insbesondere die Komponenten, deren Wartungsintervalle erfahrungsgemäß größer sind als die anderer Komponenten, eine entsprechende Verankerung aufweisen. Dadurch ergibt sich der Vorteil, dass die zu wartenden Komponenten ohne Weiteres der Energieerzeugungseinheit entnommen werden können, während die nicht zu wartenden Komponenten z. B. im Fluss verbleiben können. Insbesondere trifft dies für das Saugrohr zu, da dieses eine relativ gesehene große Komponente darstellt, jedoch als solche nahezu wartungsfrei ist. In diesem Zusammenhang kann es sich als zweckmäßig erweisen, wenn die Verankerung nicht unmittelbar am Flussgrund, sondern mit einem gewissen Sicherheitsabstand darüber erfolgt. Hierdurch kann dem Eintritt von Schadelementen vorgebeugt werden.

Von Vorteil ist es, wenn die Verankerungsmittel eine zieh- und/oder lösbare Einhängevorrichtung umfassen oder als solche ausgebildet sind. So können z.B. am Grund des Gewässer verankerte Hakenelemente vorgesehen sein, an bzw. in denen die Energieerzeugungseinheit und/oder Komponenten der Energieerzeugungseinheit eingehakt bzw. eingehängt werden können.

Des weiteren ist es möglich, dass die Verankerungsmittel selbstpositionierende und/oder selbsthemmende Einhänge- und/oder Kopplungsmittel umfassen oder als solche ausgebildet sind. Derartige Einhänge- und/oder Kopplungsmittel können beispielsweise in Verkeilungselementen, Einrasthaken oder Verrastungselementen bestehen. Durch die Selbstpositionierung und Selbsthemmung ergibt sich der Vorteil, dass eine sichere Verankerung gewährleistet werden kann.

Darüber hinaus wird bevorzugt, wenn Auftriebsmittel vorgesehen sind, die zumindest teilweise an den Komponenten angebracht und/oder diesen zugeordnet sind. Dies ist insbesondere dann von Vorteil, wenn Komponenten wie das Saugrohr während der Wartung anderer Komponenten z. B. im Flussbett verbleiben sollen. Die Auftriebsmittel bewirken, dann diese Komponenten nicht auf den Grund absinken, sondern knapp unterhalb der Wasseroberfläche aufgrund des Auftriebs verbleiben.

Es kann vorgesehen sein, dass die Auftriebsmittel zumindest teilweise als Tanks ausgeführt sind. Diese Tanks können beispielsweise mit Wasser oder Pressluft befüllt werden, um die Auftriebshöhe einzustellen. In diesem Zusammenhang ist denkbar, dass die Energieerzeugungseinheit eine eigene oder eine zentrale Steuerung und/oder Regelung aufweist, die u. a. die auch die Auftriebshöhe steuert bzw. einregelt, und zwar durch die Befüllung der Tanks mit Pressluft oder Wasser.

Darüber hinaus ist denkbar, dass zumindest das Saugrohr mittels Auftriebsmitteln selbständig schwimmfähig ausgeführt und/oder am Gewässerboden selbstständig verankert ist. Dabei kann vorgesehen sein, dass die Auftriebsmittel beispielsweise eine segmentartige Struktur der Wandung aufweist, in denen Auftriebskörper untergebracht sind. Ferner ist es dabei möglich, dass das Saugrohr beispielsweise mittels einer Ankerkette direkt am Gewässerboden selbständig verankert ist. Dadurch ergibt sich der Vorteil, dass das Saugrohr komplett von dem übrigen Teil der Energieerzeugungseinheit abgekoppelt und an Ort und Stelle belassen werden kann, ohne weitere Maßnahmen ergreifen zu müssen.

Des Weiteren kann vorgesehen sein, dass dem Einlaufgehäuse eine Auffangvorrichtung, insbesondere ein Rechen vorgeordnet ist. Ein derartiger Rechen weist den Vorteil auf, dass beispielsweise Treibgut vom Eintritt in die Turbine gehindert und somit Beschädigungen der Turbine verhindert werden können.

Ferner wird bevorzugt, wenn das Saugrohr als ovaler oder elliptischer Diffusor ausgeführt ist. So wird im Vergleich zum hydromechanisch optimalen kreisrunden Austritt bei gleicher Austrittsfläche die Bauhöhe verringert, wodurch auch ein Einsatz in Gewässern mit niedrigen Pegelständen ermöglicht wird. Ferner wird durch diese Gestaltung die Lagestabilität der Energieerzeugungseinheit erhöht. Um diese Form des Diffusors einfach und kostengünstig zu realisieren, ist es möglich, die nicht gewölbten Wandungen beispielsweise aus Stahlblech auszuführen, während die gewölbten Wandungen aus GFK-Rohr gefertigt sind. Bleche und Rohre werden dabei verschraubt, wobei die oberen und unteren Bleche mittels Streben stabilisiert werden können.

Des Weiteren ist denkbar, dass zumindest teilweise Aufnehmer und/oder Befestigungsmittel an den Komponenten zum Herausheben der jeweiligen Komponente vorgesehen sind. Derartige Aufnehmer können beispielsweise in Zapfen, Haken oder angeschweißten Lochblechen bestehen, an denen Hebemittel wie Seile angebracht werden können. Dies erleichtert es, die jeweilige Komponente beispielsweise mit einem Schiffskranausleger zu heben.

Darüber hinaus betrifft die Erfindung ein Verfahren zur Wartung einer Energieerzeugungseinheit mit den Merkmalen des Anspruchs 16. Danach ist vorgesehen, dass zur Wartung einer Energieerzeugungseinheit, insbesondere einer an einem Gewässergrund stehenden oder im Wasser schwimmenden Energieerzeugungseinheit, bestehend aus Komponenten, wobei die Komponenten ein Einlaufgehäuse, ein Turbinengehäuse, ein Antriebsaggregat, das im Turbinengehäuse angeordnet ist und ein nachgeordnetes Saugrohr umfassen, zur Wartung der Energieerzeugungseinheit das Saugrohr im Wasser verbleibt und wenigstens eine zu wartende Komponente der Energieerzeugungseinheit zur Wartung entnommen wird. Vorzugsweise handelt es sich bei der zu wartenden Komponente um das Antriebsaggregat bzw. Teile des Antriebsaggregats wie z. B. die Turbine. Der Begriff Wartung ist in diesem Zusammenhang als Oberbegriff für Reparatur, Inaugenscheinnahme, Austausch oder ähnlich gelagerte Tätigkeiten im Zusammenhang mit dem Betrieb der Energieerzeugungseinheit zu verstehen.

Des Weiteren kann vorgesehen sein, dass zumindest das Antriebsaggregat zur Wartung entnommen wird. Die restlichen Komponenten verbleiben im Wasser.

Es wird bevorzugt, wenn es sich bei der Energieerzeugungseinheit um eine Energieerzeugungseinheit gemäß einem der Ansprüche 1 bis 15 handelt.

Weitere Einzelheiten und Vorteile sollen nun anhand eines in der Zeichnung näher dargestellten Ausführungsbeispiels beschrieben werden. Es zeigen:
- Figur 1:: eine perspektivische Ansicht einer Energieerzeugungseinheit,
- Figur 2:: eine Explosionszeichnung in perspektivischer Ansicht der in Figur 1 gezeigten Energieerzeugungseinheit,
- Figur 3:: die Energieerzeugungseinheit in der Draufsicht,
- Figur 4:: die Energieerzeugungseinheit in der Seitenansicht,
- Figur 5:: eine Detailansicht des Turbinengehäuses mit Rotor in perspektivischer Ansicht,
- Figur 6:: eine perspektivische Ansicht des Diffusors und
- Figur 7:: eine perspektivische Ansicht der Energieerzeugungseinheit in einer weiteren Ausführungsform.

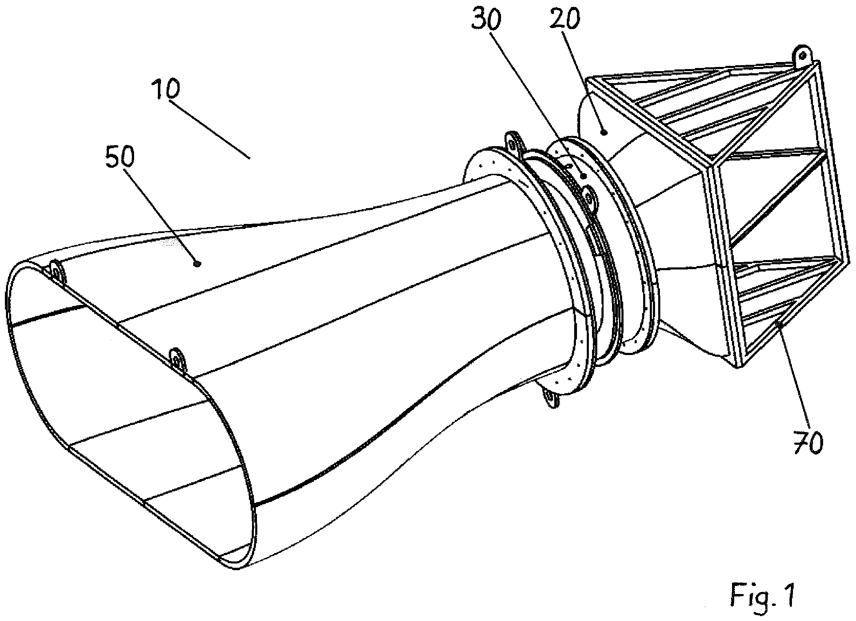

Figur 1 zeigt eine Energieerzeugungseinheit 10, die sowohl an einem Gewässergrund stehend oder im Wasser schwimmend angeordnet werden kann. Vorzugsweise wird eine derartige Energieerzeugungseinheit 10 in den Strömungsbereichen eines Gewässers, insbesondere eines Flusses angeordnet, der nicht schiffbar ist. Dabei ist beispielsweise denkbar, die Energieerzeugungseinheit 10 mit Signalmitteln gleichsam einer Boje auszurüsten, um die Schifffahrtsrinne zu kennzeichnen.

Die modular aufgebaute Energieerzeugungseinheit weist dabei mehrere Komponenten 20, 30, 40, 50 auf, die ihrerseits lösbar mittels Verbindungsmitteln verbunden sind. Die Komponenten 20, 30, 40, 50 sind dabei im Einzelnen das Einlaufgehäuse 20, das Turbinengehäuse 30, das nachgeordnete Saugrohr 50, das in der hier gezeigten Ausführungsform als Diffusor 50 ausgeführt ist sowie vorgeordnet dem Einlaufgehäuse 20 eine Auffangvorrichtung 70 zur Verhinderung von Fremdkörpereintritten in die Energieerzeugungseinheit 10.

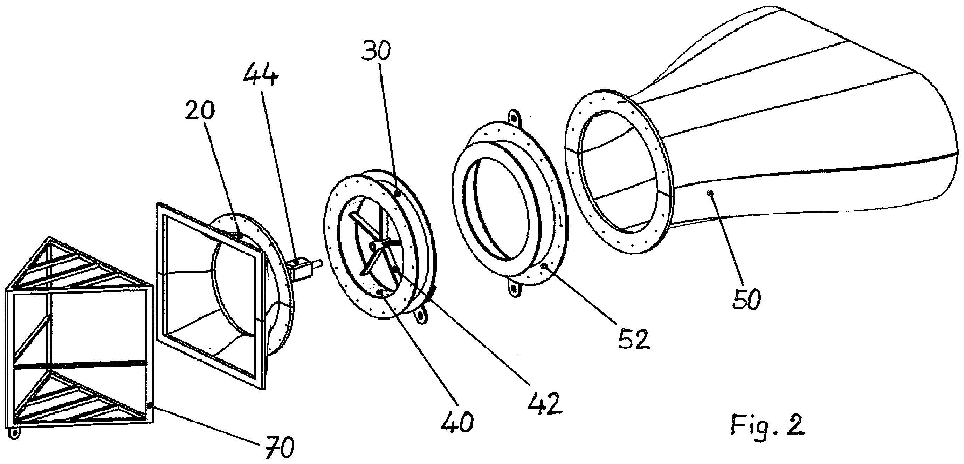

Figur 2 zeigt die in Figur 1 gezeigte Energieerzeugungseinheit in einer Explosionsdarstellung. Neben den in Figur 1 bereits beschriebenen Komponenten ist in Figur 2 das Antriebsaggregat 40 dargestellt, das die Turbine 42 und einen Generator 44 umfasst. Das Antriebsaggregat 40 ist dabei im Turbinengehäuse 30 untergebracht, das sich zwischen dem Einlaufgehäuse und den Bestandteilen des Diffusors 50 befindet. Dem Diffusor 50 ist hierbei eine weitere Komponente vorgeordnet, nämlich einem Erweiterungsring 52, der direkt an das Turbinengehäuse 30 anschließt und den durchgeleiteten Wasserstrom in den Diffusor 50 führt.

Um die Energieerzeugungseinheit 10 zu warten, z.B. den Generator auszutauschen, können Auffangvorrichtung 70 und Einlaufgehäuse 20 abgenommen werden. Hierzu sind einfach zu lösende Verbindungsmittel wie Schraubverbindungen oder Einhak- und/oder Hubverbindungen vorgesehen. Alternativ können Gelenke zwischen Einlaufgehäuse 20 und Turbinengehäuse 30 vorgesehen sein, so dass nur eine Verriegelung zu lösen und Einlaufgehäuse 20 mitsamt Auffangvorrichtung 70 wegzuklappen sind, um an das Antriebsaggregat 40 zu gelangen.

Diese Verfahrensschritte können von einem Ponton, einem Schiff oder durch Taucher ohne weiteres bewerkstelligt werden. Auf einen schweren Kran kann jedoch in der Regel verzichtet werden. Die übrigen Komponenten, also das Turbinengehäuse 30, der Erweiterungsring 52, das Saugrohr 50 und im Falle der Gelenkausführung auch das Einlaufgehäuse 20 mit der Auffangvorrichtung 70, verbleiben im Wasser und müssen nicht auftauchen bzw. gehoben werden, wenn z.B. nur der Generator 44 getauscht, repariert oder begutachtet wird.

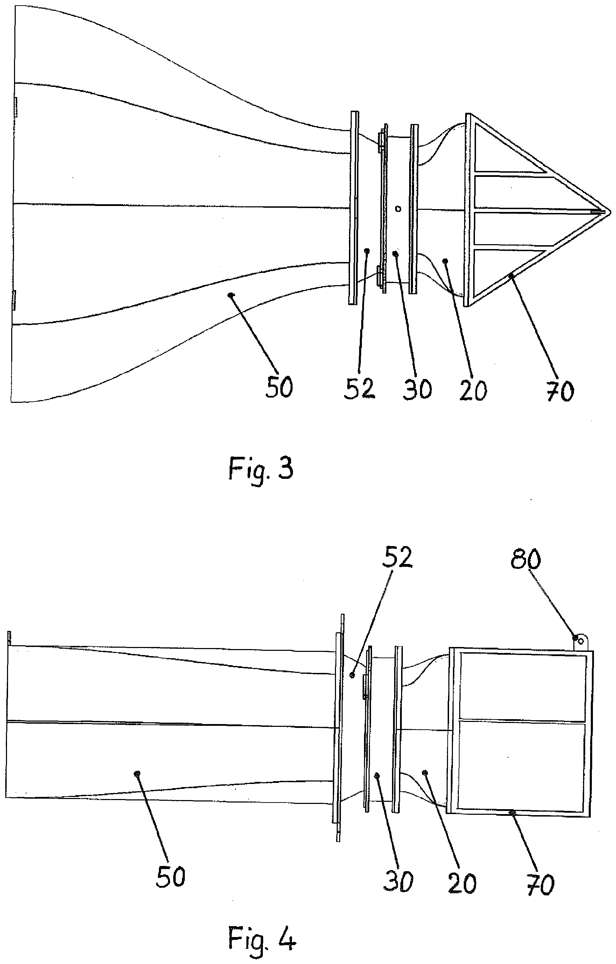

Figuren 3 und 4 zeigen die Energieerzeugungseinheit 10 nochmals in einer Draufsicht und Seitenansicht. Wie dies aus Figur 4 gut ersichtlich ist, weist die Energieerzeugungseinheit 10 im wesentlichen eine einheitliche Bauhöhe auf, die es erlaubt, auch in flachen Gewässern eine derartige Energieerzeugungseinheit 10 einzusetzen.

Wie sich dies aus Fig. 3 ergibt, wird der im Endbereich im Querschnitt im wesentlichen oval ausgeführte Diffusor 50 von einer runden Querschnittsform des Erweiterungsrings 52 unter einer Aufweitung auf die ovalen Querschnittsform im Endbereich überführt. So wird durch die ovale Querschnittsform am Austritt bzw. Endbereich des Diffusors 50 im Vergleich zur hydrodynamisch eigentlich günstigeren runden Querschnittsform die gleiche Austrittsfläche beibehalten, jedoch die Bauhöhe z.B. des Einlaufgehäuses 20 nicht überschritten. Ferner geht mit dieser Gestaltung eine verbesserte Lagestabilität einher, da der Diffusor 50 bei dieser Ausgestaltung nicht zum Rollen im bewegten Gewässer neigt.

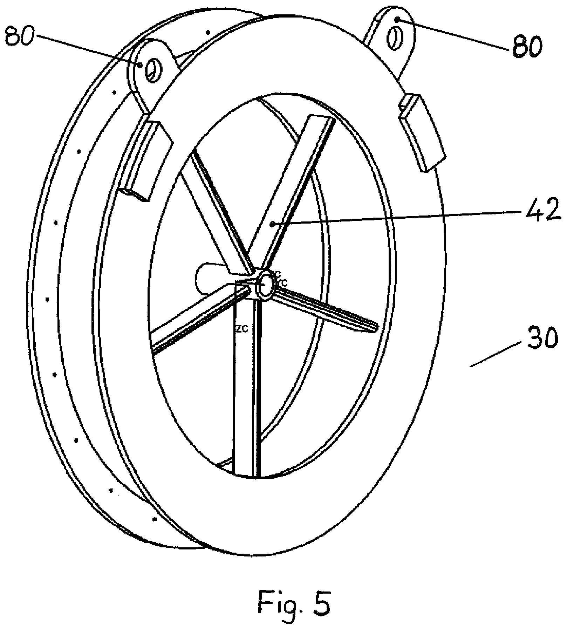

Figur 5 zeigt im Detail das Turbinengehäuse 30, in dem die Turbine 44 angeordnet ist. Dabei weist das Turbinengehäuse 30 zwei Aufnehmer 80 auf, an denen nicht näher dargestellte Hebemittel befestigt werden können, um das Turbinengehäuse 30 z. B. zu Wartungs- oder Reparaturzwecken aus dem Wasser zu heben.

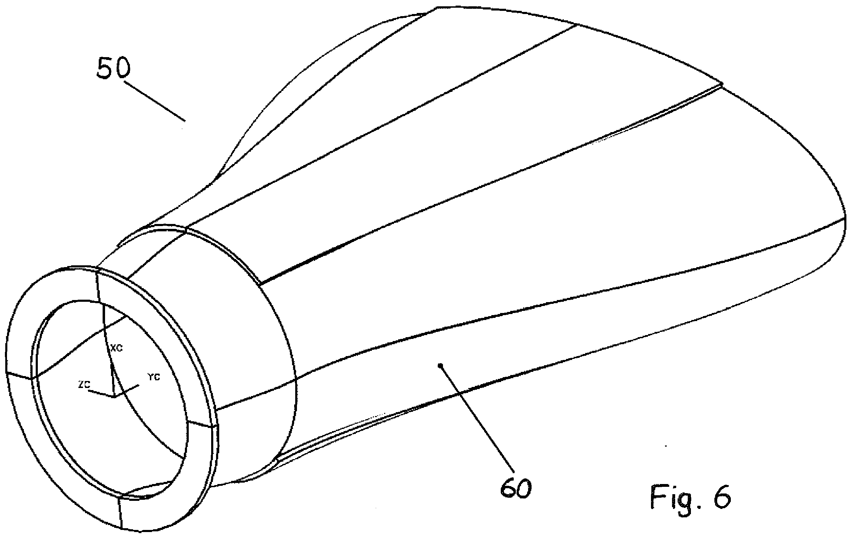

Figur 6 zeigt in perspektivischer Darstellung den Diffusor 50. Dabei weist der Diffusor 50 auf seiner Ober- und Unterseite in den weniger gewölbten Bereichen der Wandung als Hohlkammern ausgeführte Auftriebsmittel 60 auf, in die je nach benötigter Auftriebshöhe Pressluft eingeblasen werden kann. Zum Absenken ist es ebenfalls möglich, diese als Auftriebskörper ausgeführten Auftriebsmittel 60 zu fluten.

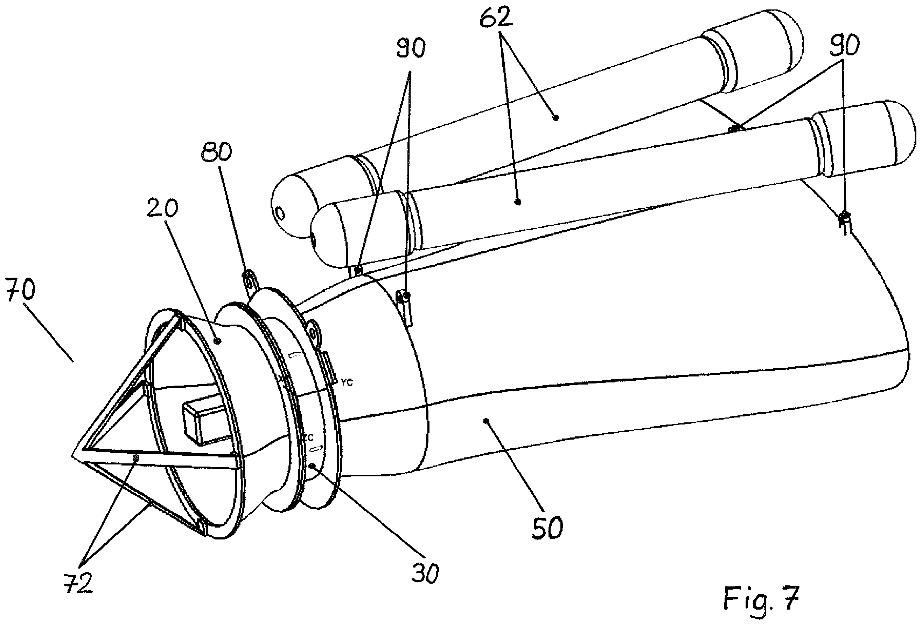

Eine weitere mögliche Lösung hinsichtlich der Auftriebsmittel 60 ist in Figur 7 gezeigt. Hierbei werden externe Tanks 62 auf der Oberseite oder Unterseite des Diffusors 50 angeordnet. Hierzu sind an der Oberseite des Diffusors Lochbleche 90 vorgesehen, an denen die Tanks 62 befestigt werden können.

Darüber hinaus ist in Figur 7 eine alternative Ausführungsform einer vorgeordneten Auffangvorrichtung 70 gezeigt. Diese Auffangvorrichtung 70 besteht hierbei aus pyramidenförmig angeordneten Streben 72, die am Einlaufgehäuse 20 befestigt sind und den Eintritt von Fremdkörper wie z. B. Treibgut verhindern sollen. Ferner ist zwischen Turbinengehäuse 30 und dem Saugrohr 50 abweichend von dem in den Figuren 1 bis 4 gezeigten Ausführungsbeispiel kein Erweiterungsring 52 vorgesehen.

## Patentansprüche

1. Energieerzeugungseinheit (10), insbesondere eine an einem Gewässergrund stehende und/oder im Wasser schwimmende Energieerzeugungseinheit (10), bestehend aus Komponenten (20, 30, 40, 50), wobei die Komponenten ein Einlaufgehäuse (20), ein Turbinengehäuse (30), ein Antriebsaggregat (40), das im Turbinengehäuse (30) angeordnet ist, und ein nachgeordnetes Saugrohr (50) umfassen, **dadurch gekennzeichnet, dass** lösbare Verbindungsmittel vorgesehen sind, mittels derer die Komponenten (20, 30, 40, 50) verbindbar sind, wobei die Verbindungsmittel zumindest teilweise als fernbetätigbare und/oder lösbare Verriegelungsmittel ausgebildet sind, wobei Führungsmittel vorgesehen sind, mittels derer aneinander angrenzende Komponenten (20, 30, 40, 50) zusammen- und/oder auseinanderführbar sind.

2. Energieerzeugungseinheit (10) nach Anspruch 1, **dadurch gekennzeichnet, dass** die Verbindungsmittel zumindest teilweise als Einhak- und/oder Hubverbindungen ausgeführt sind.

3. Energieerzeugungseinheit (10) nach einem der vorhergehenden Ansprüche, dass ein oder mehrere Gelenke zum Verschwenken eines Teiles oder von Teilen der Energieerzeugungseinheit (10) und/oder zum Verschwenken von Komponenten (20, 30, 40, 50) gegeneinander vorgesehen sind.

4. Energieerzeugungseinheit (10) nach einem der vorhergehenden Ansprüche, **dadurch gekennzeichnet, dass** an der Energieerzeugungseinheit (10) wenigstens eine Tür und/oder Klappe vorgesehen ist, durch die das Antriebsaggregat (40) oder Teile des Antriebsaggregats (40, 42, 44) entnehmbar sind.

5. Energieerzeugungseinheit (10) nach einem der vorhergehenden Ansprüche, **dadurch gekennzeichnet, dass** Verankerungsmittel vorgesehen sind, mittels derer die Komponenten (20, 30, 40, 50) zumindest teilweise am Gewässergrund verankerbar sind.

6. Energieerzeugungseinheit (10) nach Anspruch 5, **dadurch gekennzeichnet, dass** die Verankerungsmittel eine zieh- und/oder lösbare Einhängevorrichtung umfassen oder als solche ausgebildet sind.

7. Energieerzeugungseinheit (10) nach Anspruch 5 oder 6, **dadurch gekennzeichnet, dass** die Verankerungsmittel selbstpositionierende und/oder selbsthemmende Einhänge- und/oder Kopplungsmittel umfassen oder als solche ausgebildet sind.

8. Energieerzeugungseinheit (10) nach einem der vorhergehenden Ansprüche, **dadurch gekennzeichnet, dass** Auftriebsmittel (60) vorgesehen sind, die zumindest teilweise an den Komponenten (20, 30, 40, 50) angebracht und/oder diesen zugeordnet sind.

9. Energieerzeugungseinheit (10) nach einem der vorhergehenden Ansprüche, **dadurch gekennzeichnet, dass** die Auftriebsmittel (60) zumindest teilweise als Tanks (62) ausgeführt sind.

10. Energieerzeugungseinheit (10) nach einem der vorhergehenden Ansprüche, **dadurch gekennzeichnet, dass** zumindest das Saugrohr (50) mittels Auftriebsmitteln (60) selbständig schwimmfähig ausgeführt und/oder am Gewässerboden selbstständig verankert ist.

11. Energieerzeugungseinheit (10) nach einem der vorhergehenden Ansprüche, **dadurch gekennzeichnet, dass** dem Einlaufgehäuse (20) eine Auffangvorrichtung (70), insbesondere ein Rechen (72) vorgeordnet ist.

12. Energieerzeugungseinheit (10) nach einem der vorhergehenden Ansprüche, **dadurch gekennzeichnet, dass** das Saugrohr (50) als ovaler oder elliptischer Diffusor (50) ausgeführt ist.

13. Energieerzeugungseinheit (10) nach einem der vorhergehenden Ansprüche, **dadurch gekennzeichnet, dass** zumindest teilweise Aufnehmer (80) und/oder Befestigungsmittel (80) an den Komponenten (20, 30, 40, 50) zum Herausheben der jeweiligen Komponente (20, 30, 40, 50) vorgesehen sind.

14. Verfahren zur Wartung einer Energieerzeugungseinheit (10), insbesondere eine an einem Gewässergrund stehende oder im Wasser schwimmende Energieerzeugungseinheit (10), bestehend aus Komponenten (20, 30, 40, 50), wobei die Komponenten (20, 30, 40, 50) ein Einlaufgehäuse (20), ein Turbinengehäuse (30), ein Antriebsaggregat (40), das im Turbinengehäuse (30) angeordnet ist, und ein nachgeordnetes Saugrohr (50) umfassen, wobei zur Wartung der Energieerzeugungseinheit (10) das Saugrohr (50) im Wasser verbleibt und wenigstens eine zu wartende Komponente (20, 30, 40, 50) der Energieerzeugungseinheit (10) zur Wartung entnommen wird.

15. Verfahren zur Wartung einer Energieerzeugungseinheit (10) nach Anspruch 14, **dadurch gekennzeichnet, dass** zumindest das Antriebsaggregat (40) zur Wartung entnommen wird.

16. Verfahren zur Wartung einer Energieerzeugungseinheit (10) nach Anspruch 14 oder 15, **dadurch gekennzeichnet, dass** die Energieerzeugungseinheit (10) gemäß einem der Ansprüche 1 bis 13 ausgeführt ist.

## Claims

1. Energy-generating unit (10), especially an energy-generating unit (10) standing on a bed of a stretch of water and/or floating in the water, consisting of components (20, 30, 40, 50), the components comprising an inlet housing (20), a turbine housing (30), a drive unit (40) which is arranged in the turbine housing (30), and a downstream draught tube (50), **characterized in that** provision is made for releasable connecting means, by means of which the components (20, 30, 40, 50) can be connected, the connecting means being designed at least partially as remotely operable and/or releasable locking means, provision being made for guiding means, by means of which adjoining components (20, 30, 40, 50) can be brought together and/or moved apart.

2. Energy-generating unit (10) according to Claim 1, **characterized in that** the connecting means are constructed at least partially as hook-in and/or lifting connections.

3. Energy-generating unit (10) according to one of the preceding claims, **characterized in that** provision is made for one or more joints for the pivoting of a part, or of parts, of the energy-generating unit (10) and/or for the mutual pivoting of components (20, 30, 40, 50).

4. Energy-generating unit (10) according to one of the preceding claims, **characterized in that** provision is made on the energy-generating unit (10) for at least one door and/or flap by means of which the drive unit (40), or parts of the drive unit (40, 42, 44), can be removed.

5. Energy-generating unit (10) according to one of the preceding claims, **characterized in that** provision is made for anchoring means, by means of which the components (20, 30, 40, 50) can be anchored at least partially on the bed of the stretch of water.

6. Energy-generating unit (10) according to Claim 5, **characterized in that** the anchoring means comprise a pullable and/or releasable suspension device, or are designed as such.

7. Energy-generating unit (10) according to Claim 5 or 6, **characterized in that** the anchoring means comprise self-positioning and/or self-locking suspension and/or coupling means, or are designed as such.

8. Energy-generating unit (10) according to one of the preceding claims, **characterized in that** provision is made for buoyancy means (60) which are attached at least partially to the components (20, 30, 40, 50) and/or are associated with these.

9. Energy-generating unit (10) according to one of the preceding claims, **characterized in that** the buoyancy means (60) are constructed at least partially as tanks (62).

10. Energy-generating unit (10) according to one of the preceding claims, **characterized in that** at least the draught tube (50) is of an independently floatable construction by means of buoyancy means (60) and/or is independently anchored on the bed of the stretch of water.

11. Energy-generating unit (10) according to one of the preceding claims, **characterized in that** a trapping device (70), especially a trash screen (72), is located in front of the inlet housing (20).

12. Energy-generating unit (10) according to one of the preceding claims, **characterized in that** the draught tube (50) is constructed as an oval or elliptical diffuser (50).

13. Energy-generating unit (10) according to one of the preceding claims, **characterized in that** provision is made at least partially for pick-up points (80) and/or fastening means (80) on the components (20, 30, 40, 50) for lifting out the respective component (20, 30, 40, 50).

14. Method for maintaining an energy-generating unit (10), especially an energy-generating unit (10) standing on a bed of a stretch of water or floating in the water, consisting of components (20, 30, 40, 50), the components (20, 30, 40, 50) comprising an inlet housing (20), a turbine housing (30), a drive unit (40) which is arranged in the turbine housing (30), and a downstream draught tube (50), wherein for maintaining the energy-generating unit (10) the draught tube (50) remains in the water and at least one component (20, 30, 40, 50) of the energy-generating unit (10) that is to be maintained is removed for maintenance.

15. Method for maintaining an energy-generating unit (10) according to Claim 14, **characterized in that** at least the drive unit (40) is removed for maintenance.

16. Method for maintaining an energy-generating unit (10) according to Claim 14 or 15, **characterized in that** the energy-generating unit (10) is constructed in accordance with one of Claims 1 to 13.

## Revendications

1. Unité de production d'énergie (10), en particulier unité de production d'énergie (10) dressée sur un fond de cours d'eau et/ou flottant dans l'eau, composée de composants (20, 30, 40, 50), dans laquelle les composants comprennent un boîtier d'entrée (20), une enceinte de turbine (30), un groupe d'entraînement (40), qui est disposé dans l'enceinte de turbine (30), et un tube d'aspiration disposé en aval (50), **caractérisée en ce qu'**il est prévu des moyens d'assemblage, à l'aide desquels les composants (20, 30, 40, 50) peuvent être assemblés, dans laquelle les moyens d'assemblage sont réalisés au moins en partie sous la forme de moyens de verrouillage pouvant être commandés à distance et/ou séparés, dans laquelle il est prévu des moyens de guidage, à l'aide desquels des composants (20, 30, 40, 50) adjacents l'un à l'autre peuvent être rassemblés et/ou écartés l'un de l'autre.

2. Unité de production d'énergie (10) selon la revendication 1, **caractérisée en ce que** les moyens d'assemblage sont réalisés au moins en partie sous la forme de liaison d'accrochage et/ou de levage.

3. Unité de production d'énergie (10) selon l'une quelconque des revendications précédentes, **caractérisée en ce qu'**il est prévu une ou plusieurs articulation(s) pour faire pivoter une partie ou des parties de l'unité de production d'énergie (10) et/ou pour faire pivoter de composants (20, 30, 40, 50) l'un par rapport à l'autre.

4. Unité de production d'énergie (10) selon l'une quelconque des revendications précédentes, **caractérisée en ce qu'**il est prévu sur l'unité de production d'énergie (10) au moins une porte et/ou un clapet, par laquelle/lequel le groupe d'entraînement (40) ou des parties du groupe d'entraînement (40, 42, 44) peut/peuvent être enlevé(es).

5. Unité de production d'énergie (10) selon l'une quelconque des revendications précédentes, **caractérisée en ce qu'**il est prévu des moyens d'ancrage, au moyen desquels les composants (20, 30, 40, 50) peuvent être au moins en partie ancrés dans le fond de l'eau.

6. Unité de production d'énergie (10) selon la revendication 5, **caractérisée en ce que** les moyens d'ancrage comprennent un dispositif de suspension tractable et/ou détachable ou sont réalisés comme tels.

7. Unité de production d'énergie (10) selon la revendication 5 ou 6, **caractérisée en ce que** les moyens d'ancrage comprennent des moyens de suspension et/ou de couplage à positionnement automatique et/ou à blocage automatique ou sont réalisés comme tels.

8. Unité de production d'énergie (10) selon l'une quelconque des revendications précédentes, **caractérisée en ce qu'**il est prévu des moyens de poussée verticale (60), qui sont au moins en partie installés sur les composants (20, 30, 40, 50) et/ou qui sont associés à ceux-ci.

9. Unité de production d'énergie (10) selon l'une quelconque des revendications précédentes, **caractérisée en ce que** les moyens de poussée verticale (60) sont réalisés au moins en partie sous la forme de réservoirs (62).

10. Unité de production d'énergie (10) selon l'une quelconque des revendications précédentes, **caractérisée en ce qu'**au moins le tube d'aspiration (50) est réalisé sous forme flottante autonome à l'aide des moyens de poussée verticale (60) et/ou est ancré de manière autonome dans le fond de l'eau.

11. Unité de production d'énergie (10) selon l'une quelconque des revendications précédentes, **caractérisée en ce qu'**un dispositif de capture (70), en particulier un râteau (72), est disposé avant le boîtier d'entrée (20).

12. Unité de production d'énergie (10) selon l'une quelconque des revendications précédentes, **caractérisée en ce que** le tube d'aspiration (50) est réalisé sous la forme d'un diffuseur ovale ou elliptique (50).

13. Unité de production d'énergie (10) selon l'une quelconque des revendications précédentes, **caractérisée en ce qu'**il est prévu sur les composants (20, 30, 40, 50) des leveurs (80) et/ou des moyens de fixation (80) au moins partiels pour le levage des composants respectifs (20, 30, 40, 50).

14. Procédé de maintenance d'une unité de production d'énergie (10), en particulier d'une unité de production d'énergie (10) dressée sur un fond de cours d'eau ou flottant dans l'eau, composée de composants (20, 30, 40, 50), dans lequel les composants (20, 30, 40, 50) comprennent un boîtier d'entrée (20), une enceinte de turbine (30), un groupe d'entraînement (40), qui est disposé dans l'enceinte de turbine (30), et un tube d'aspiration disposé en aval (50), dans lequel le tube d'aspiration (50) reste dans l'eau pour la maintenance de l'unité de production d'énergie (10) et au moins un composant à entretenir (20, 30, 40, 50) de l'unité de production d'énergie (10) est prélevé pour la maintenance.

15. Procédé de maintenance d'une unité de production d'énergie (10) selon la revendication 14, **caractérisé en ce qu'**au moins le groupe d'entraînement (40) est enlevé pour la maintenance.

16. Procédé de maintenance d'une unité de production d'énergie (10) selon la revendication 14 ou 15, caractérisé en que l'unité de production d'énergie (10) est réalisée selon l'une quelconque des revendications 1 à 13.
